# EUROPÄISCHE PATENTSCHRIFT

(11) **EP 1 398 539 B1**
(45) Veröffentlichungstag und Bekanntmachung des Hinweises auf die Patenterteilung: **30.11.2005**
(21) Anmeldenummer: 02019891.7
(22) Anmeldetag: 10.09.2002
(51) Int. Cl.: F16H 7/12

(54) **Riemenspanner**
Belt tensioner
Tendeur de courroie

(43) Veröffentlichungstag der Anmeldung: 17.03.2004
(73) Patentinhaber: Litens Automotive GmbH, 63571 Gelnhausen (DE)
(72) Erfinder: Schönmeier, Horst, 63571 Gelnhausen (DE); Fischer, Michael, 97778 Fellen (DE)
(74) Vertreter: Grünecker, Kinkeldey, Stockmair & Schwanhäusser Anwaltssozietät

(56) Entgegenhaltungen:
- EP-A- 0 652 390
- EP-A- 0 857 890

## Beschreibung

Die Erfindung bezieht sich auf einen Riemenspanner der im Oberbegriff von Anspruch 1 erläuterten Art.

Ein derartiger Riemenspanner ist aus der EP 0 652 390 bekannt. Der bekannte Riemenspanner wird beispielsweise für Kraftfahrzeuge zum Spannen des Keilriemens eingesetzt. Der Riemenspanner enthält ein Spannteil mit einem Spannarm, der an einem Ende mit einer Spannrolle versehen ist, der am Riemen anliegt. Das Spannteil enthält weiterhin eine Lagerbuchse, die über ein Radialgleitlager auf einem Lagerzapfen sitzt. Das Radialgleitlager enthält eine Lagerhülse aus Kunststoff, insbesondere Nylon. Die Verdrehung des Spannteils mit der Lagerbuchse um den Lagerzapfen erfolgt unter Belastung durch eine Drehfeder. Die Lagerhülse aus Kunststoff enthält einen radialen Flansch, an dem eine weitere Feder angreift. Die weitere Feder drückt die Lagerhülse zusammen mit der Lagerbuchse gegen ein Reibelement, das an der der weiteren Feder gegenüberliegenden Stirnseite der Lagerbuchse angeordnet ist und an einer ortsfesten Druckplatte anliegt. Die weitere Feder ist so ausgebildet, dass sie einen Spalt zwischen der Lagerhülse aus Kunststoff und dem Lagerzapfen aus Metall bildet, in dem sich Verschleißpartikel ansammeln können. Die weitere Feder ist weiterhin so ausgebildet, dass sie durch Druck auf das Reibelement ein Rattern des Riemenspanners verhindern hilft.

Weitere Riemenspanner sind beispielsweise aus der DE-A-43 27 141 oder der DE-A-40 10 928 bekannt. Auch diese Riemenspanner werden beispielsweise für Kraftfahrzeuge zum Spannen des Keilriemens eingesetzt und enthalten ein Spannteil mit einem Spannarm, der an einem Ende mit einer Spannrolle versehen ist, die am Riemen anliegt, und der mit seinem anderen Ende mit einem Radialgleitlager verbunden ist. Das Radialgleitlager enthält ein Lagerbuchsenteil und ein Lagerzapfenteil, die durch eine Lagerhülse aus Kunststoff getrennt sind, wobei eines der Teile mit dem Spannarm festgelegt und das andere Teil ortsfest gehalten wird. Eine Drehfeder in Form einer Spiral-Schlingfeder ist koaxial um Lagerbuchsen und Lagerzapfen geschlungen und mit einem Ende am Spannteil und mit dem anderen Ende ortsfest gehalten. Die bekannten Riemenspanner werden in einem Zustand eingebaut, bei dem Lagerbuchse und Lagerzapfen unter Vorspannung der Drehfeder gegeneinander verdreht worden sind, so dass durch die Spannrolle bereits eine vorbestimmte Kraft auf den Riemen ausgeübt wird. Durch die Federkraft der vorgespannten Drehfeder wird der Riemen unter einer vorbestimmten Spannung gehalten, die Spannrolle kann jedoch federnd ausweichen oder nachfolgen, sollte sich die Länge des Riemens ändern.

Bauartbedingt muss jedoch der die Riemenspannrolle tragende Spannarm außermittig bezüglich der axialen Länge des Radialgleitlagers an der Lagerbuchse oder dem Lagerzapfen angeordnet werden. Dadurch wird jedoch das Radialgleitlager durch Kippkräfte beansprucht, die einen erhöhten Verschleiß verursachen. Man hat bereits in der DE-A-43 27 141 versucht, den Anlenkpunkt der Schwenkfeder in Axialrichtung zur Drehachse so weit vom Radialgleitlager entfernt anzuordnen, dass die Resultierende der in das Radialgleitlager eingeleiteten Kraft etwa die Mitte der axialen Länge des Radialgleitlagers trifft. Dies ist jedoch nur dort möglich, wo genügend Bauraum zur Verfügung steht.

Ein weiterer Riemenspanner mit mehr als einer Feder ist in der DE-A-26 08 277 beschrieben; dort haben die Federn jedoch eine abweichende Funktion. So wird bei diesem Riemenspanner eine erste Druckfeder verwendet, die Reibscheiben entgegen das Spannteil drückt und deren Federkraft einen Schwellwert definiert, bei dem erst sich das Spannteil verschwenken kann. Der Riemenspanner hat weiterhin eine zweite Druckfeder, die als Federbein ausgebildet ist und die Spannrolle direkt gegen den Riemen drückt.

Der Einsatz von im Wesentlichen parallel zur Drehachse auf das Spannteil einwirkenden Federn ist beispielsweise bei einem Riemenspannarm nach der DE-A-195 24 403 bekannt. Dort ist jedoch diese Feder als einzige Feder verwendet und ersetzt in ihrer Funktion die Drehfeder des gattungsbildenden Standes der Technik; d.h. durch die Vorspannung der Tellerfeder wird die Spannkraft bestimmt.

Der Erfindung liegt die Aufgabe zugrunde, einen Riemenspanner der genannten Art so weiterzubilden, dass bei kompakter, kurzer Bauweise die Verschleißanfälligkeit reduziert wird.

Die Aufgabe wird durch die im Anspruch 1 angegebene Erfindung gelöst.

Erfingdungsgemäß wird das Spannteil durch eine weitere Feder belastet, die so ausgebildet ist, dass sie dem Kippmoment entgegenwirkt, das durch die durch den Riemen auf das Spannteil ausgeübte Kraft verursacht wird. Der Einsatz dieser weiteren Feder ist bei kompakter Bauart möglich, so dass der zum Einbau erforderlich Bauraum nicht vergrößert werden muss.

Vorteilhafte Weiterbildungen der Erfindung sind den Unteransprüchen zu entnehmen.

Bevorzugt wirkt die Feder auf die Lagerbuchse ein, wenn das Spannteil die Lagerbuchse aufweist.

Bewährt hat sich zu diesem Zweck eine Tellerfeder, die bevorzugt über eine Stützscheibe auf die Lagerbuchse einwirkt, wobei die von der Feder ausgeübte Kraft bevorzugt über ein Widerlager, das ein axiales Gleitlager enthält, abgestützt ist.

Von besonderem Vorteil ist die Anordnung einer Dämpfungseinrichtung, die durch die weitere Feder beaufschlagt ist. Auf diese Weise kann, falls dies erforderlich ist, eine zusätzliche Dämpfungskraft auf das Spannteil aufgebracht oder die zum Dämpfen erforderliche Dämpfungskraft zwischen der durch die Drehfeder verursachte Dämpfung und der durch die weitere Feder verursachte Dämpfung aufgesplittet werden. Damit lässt sich trotz beispielsweise eines sehr hohen Gesamtdämpfungswertes von 85 %, bezogen auf das Drehmoment, eine verschleißfreie Funktion gewährleisten.

Eine vorteilhafte Materialpaarung dieser zusätzlichen Dämpfung enthält eine Dämpfungsscheibe aus glasfaserverstärktem Kunststoff und eine Sicherungsscheibe aus Stahl.

Ausführungsbeispiele der Erfindung werden nachfolgend anhand der Zeichnungen näher erläutert. Es zeigen:
- Fig. 1: einen Teilschnitt durch ein erstes Ausführungsbeispiel eines erfindungsgemäßen Riemenspanners, und
- Fig.2: einen Teilschnitt durch ein zweites Ausführungsbeispiel eines erfindungsgemäßen Riemenspanners.

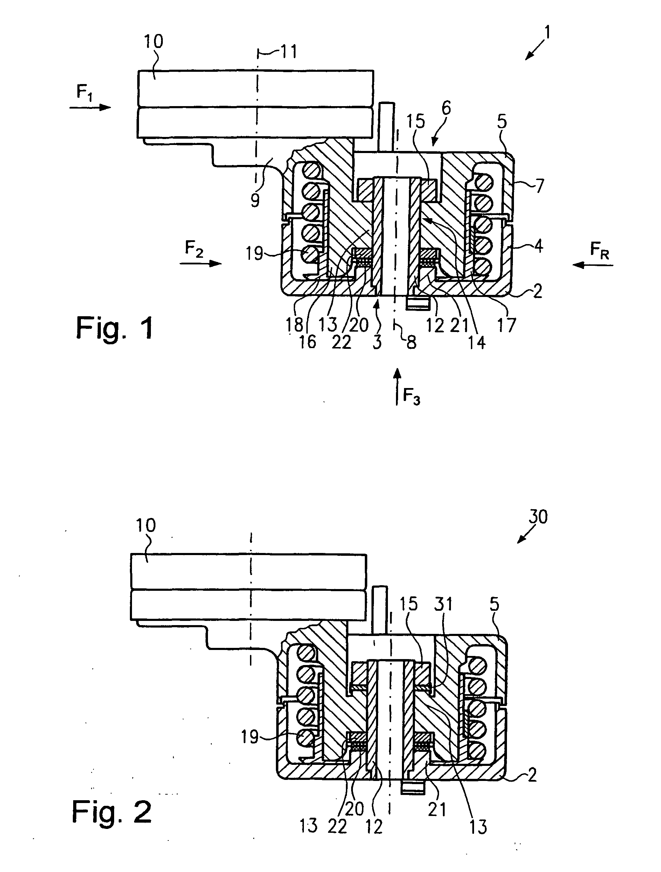

Fig. 1 zeigt einen erfindungsgemäßen Riemenspanner 1 im Teilschnitt, wie er beispielsweise zum Spannen von Riemen in Kraftfahrzeugen eingesetzt wird. Der Riemenspanner 1 ist jedoch auch für andere Einsatzzwecke geeignet, wo Riemen, Ketten oder andere endlose Übertragungselemente zu spannen sind.

Der Riemenspanner ist enthält ein Basisteil 2, das mit einer mittleren Öffnung 3 versehen ist und napfförmig hochgezogene Wände 4 aufweist, die einen Teil eines Gehäuses bilden. Der Riemenspanner 1 enthält weiterhin ein Spannteil 5, das ebenfalls eine mittlere Öffnung 6 und napfförmig hochgezogene Seitenwände 7 aufweist, wobei die Wände 4 und 7 so ausgebildet sind, dass sie die äußere Begrenzung des Riemenspanners 1 bilden und die Mittellinien der Öffnungen 3 und 6 in einer gemeinsamen Mittelinie 8 zusammenfallen.

Das Spannteil 5 ist weiterhin mit einem Spannarm 9 versehen, der in Axialrichtung asymmetrisch und im Abstand zur Mittellinie 8 am Spannteil 5 befestigt ist und über die Wand 7 vorsteht. Im Spannarm 9 ist eine Spannrolle 10 um eine nur angedeutete Achse 11 drehbar gelagert. Die Spanrolle 10 bildet eine Riemenauflage für den zu spannenden Riemen, wobei die Achse 11 parallel zur Mittellinie 8 verläuft.

In der Öffnung 3 des Basisteiles 2 ist ein Ende eines hohlen Lagerzapfens 12 befestigt, bevorzugt durch Verstemmen. Durch den hohlen Lagerzapfen 12 kann eine nicht gezeigte Schraube geführt werden, mit der der Riemenspanner 1 an einem Motorteil eines Kraftfahrzeuges oder dgl. fest montiert werden kann.

Auf diesen hohlen Lagerzapfen 12 sitzt das Spannteil 5 mit einer Lagerbuchse 13, wobei Lagerbuchse 13 und Spannzapfen 12 in Axialrichtung gegeneinander verschiebbar sind und die Innenfläche der Lagerbuchse 13 mit der Außenfläche des Lagerzapfens 12 ein radiales Gleitlager 14 bildet, so dass sich das Spannteil 5 um den Lagerzapfen 12 drehen kann, wobei die Mittellinie 8 die Drehachse bildet. Das Spannteil 5 wird durch ein Sicherungsstück 15 in Form einer Scheibe auf dem Lagerzapfen 12 gehalten, die form- und kraftschlüssig mit dem freien Ende des Lagerzapfens 12, dem Basisteil 2 gegenüberliegend, verbunden ist.

Das Spannteil 5 enthält weiterhin einen Reibkegel 16, der sich koaxial zur Mittellinie 8 erstreckt und auf dem in üblicher Weise eine Federbuchse 17 und eine Schlingbuchse 18 angeordnet sind, die eine Drehfeder 19 in Form einer Schrauben-Schlingfeder tragen. Die Drehfeder 19 ist, wie dies bei Riemenspannern dieser Art üblich ist, mit ihrem einen Ende am Basisteil 2 und mit ihrem anderen Ende am Spannteil 5 festgelegt, so dass sie durch eine Relativverdrehung des Spannteiles 5 und des Basisteiles 2 gespannt werden kann. Die Funktion und die Handhabung des Spannens mit Hilfe einer derartigen Schlingfeder ist dem Fachmann bekannt, so dass hier nicht näher darauf eingegangen werden muss.

Durch das Spannen des Riemens übt dieser eine Kraft F1 auf das Spannteil 5 aus. Da die Lagerbuchse 13 in Axialrichtung bezüglich der Drehachse 8 von der Spannrolle 10 beabstandet ist, und da, verglichen mit dem Riemenspanner 1 des gattungsbildenden Standes der Technik nach der DE 43 27 141, sich der Reibkegel 16 und somit der untere Festlegungspunkt der Schlingfeder 19 zum Einleiten einer Gegenkraft F2 in Axialrichtung zur Drehachse 8 näher an der Lagerbuchse 13 befindet als die Spannrolle 10, würde dies zu einer resultierenden Kraft führen, die außermittig am Gleitlager 14 angreift, und würde somit ein Kippmoment verursachen, das zu einem erhöhten Verschleiß des radialen Gleitlagers 14 führen würde.

Um dies zu verhindern, hat die Lagerbuchse 13 des radialen Gleitlagers 14 eine kürzere axiale Länge als der Zwischenraum zwischen der Sicherungsscheibe 15 und dem Basisteil 2 im Bereich um die Öffnung 3. In dem dadurch geschaffenen axialen Zwischenraum ist eine weitere Feder 20 angeordnet, die als ringförmige Tellerfeder ausgebildet ist, auf dem Lagerzapfen 12 sitzt und symmetrisch um die Drehachse 8 wirkt. Im Bereich dieser Tellerfeder ist bevorzugt das Basisteil 2 mit einem Sockel 21 versehen, der als Druckstück wirkt, so dass die Tellerfeder 20 gleichmäßig beaufschlagt wird. Die Tellerfeder 20 wirkt über eine Stützscheibe 22 auf die Lagerbuchse 13 ein, so dass auf die Lagerbuchse 13 parallel zur Drehachse 8 eine Kraft F₃ ausgeübt werden kann, die unterstützend zu F₂ als Gegenkraft für die vom Riemen übertragene Krafteinleitung F₁ wirkt, so dass sich eine im Wesentlichen auf die axiale Mitte des radialen Gleitlagers 14 gerichtete, resultierende Kraft F_{R} ergibt, bei der ein Kippmoment im Wesentlichen nicht erzeugt wird.

Bei der Montage kann die Kraft F₃ über den Federweg der Tellerfeder 20 variabel eingestellt werden, wobei Werte zwischen etwa 4000 bis 7000 N bevorzugt sind.

Die Tellerfedern 20 wirken über die Stützscheibe 22 auf eine Stirnseite der Lagerbuchse 13 ein und drücken diese gegen die als Widerlager wirkende Sicherungsscheibe 15. Dabei sind die einander zugewandten Seiten zwischen der Sicherungsscheibe 15 und der Lagerbuchse 13 bzw. zwischen der Lagerbuchse 13 und der Stützscheibe 22 als axiale Gleitlager ausgebildet. Diese axialen Gleitlager enthalten bevorzugt Stahlflächen, die mit PTFE beschichtet sind. Je nach Art der Beschichtung können jedoch auch diese Gleitlager zur Reibdämpfung beitragen, so dass die aufgebrachte Dämpfung zwischen der Dämpfung durch die Feder 19 und der Dämpfung durch Reibung aufgesplittet wird.

Die Gleitlager können auch durch gesonderte Scheiben und/oder in einer anderen axialen Stellung vorgesehen sein.

Fig. 2 zeigt in einer Darstellung ähnlich Fig. 1 ein zweites Ausführungsbeispiel eines Riemenspanners 30, wobei mit dem ersten Ausführungsbeispiel vergleichbare Bauteile mit den gleichen Bezugszeichen gekennzeichnet und nicht nochmals erläutert sind.

Der Riemenspanner 30 unterscheidet sich vom Riemenspanner 1 lediglich durch die Tatsache, dass hier eine zusätzliche, erhöhte Reibdämpfung durch die Anordnung einer speziellen Dämpfungsscheibe 31 erzeugt wird. Die Dämpfungsscheibe 31 ist bevorzugt zwischen der Lagerbuchse 13 und der Sicherungsscheibe 15 zwischengelegt, wobei die Lagerbuchse 13 durch die weitere Feder, d.h. die Tellerfeder 20, über die Stützscheibe 22 gegen die Dämpfungsscheibe 31 gedrückt wird und diese gegen die Sicherungsscheibe 15 drückt. Diese Ausgestaltung ist besonders dort vorteilhaft, wo durch sehr hohe anwendungsbedingte Anforderungen eine zusätzliche Reibdämpfung erforderlich ist. Dabei können Reibdämpfungswerte bis zu 60 % der Spannkraft bzw. der Drehmomente erzeugt werden. Dabei kann durch eine Abstimmung der Dämpfung über die Schlingfeder 19 einerseits und über die weitere Feder 20 andererseits, bzw. ein Splitten der Dämpfung unter beiden Systemen trotz eines Gesamtdämpfungswertes von 85 %, bezogen auf das Drehmoment, eine verschleißfreie Funktion gewährleistet werden.

Eine vorteilhafte Materialpaarung für die Dämpfungsscheibe 31 und die anliegende Sicherungsscheibe 15 ist beispielsweise ein glasfaserverstärktes Polyamid, insbesondere PA 46 mit 5 % Glasfaseranteil, für die Dämpfungsscheibe 31 und ein rostfreier Stahl, insbesondere V2A, für die Sicherungsscheibe 15. Die Gleitlager, die in diesem Falle zwischen der Lagerbuchse 13 und der Dämpfungsscheibe 31 bzw. der Lagerbuchse 13 und der Stützscheibe 22, angeordnet sind, können wie beim ersten Ausführungsbeispiel mit PTFE beschichtete Gleitflächen aus Stahl enthalten, die gegebenenfalls an zusätzlichen, in den Zeichnungen nicht dargestellten Scheiben angeordnet sind.

In Abwandlung der beschriebenen und gezeichneten Ausführungsbeispiele ist auch eine andere Reihenfolge der Bauteile möglich. So kann beispielsweise die Tellerfeder an der der Sicherungsscheibe zugewandten Seite der Lagerbuchse angeordnet sein. Statt einer Tellerfeder kann eine andere geeignete Feder verwendet werden. Die Materialauswahl kann im Hinblick auf die zu erzielende Lebensdauer und/oder die erforderlichen Dämpfungswerte vorgenommen werden. Die Erfindung ist weiterhin auch einsetzbar, wenn der Spannarm mit den Lagerzapfen verbunden ist.

## Patentansprüche

1. Riemenspanner (1, 30) mit einem Spannteil (5), das über eine Riemenauflage (10) zum Aufbringen einer Spannkraft mit einem Riemen in Kontakt bringbar ist und im Abstand zur Riemenauflage (10) mit einem radialen Gleitlager (14) verbunden und um dessen Drehachse (8) verschwenkbar ist, wobei die Spann- und Verschwenkbewegung der Riemenauflage (10) unter Belastung durch eine Drehfeder (19) erfolgt, und wobei das Spannteil (5) durch eine weitere Feder (20) belastet ist, **dadurch gekennzeichnet, dass** das radiale Gleitlager (14) durch die Innenfläche einer Lagerbuchse (13) und die Außenfläche eines Lagerzapfens (12) gebildet ist, die gegen die Kraft der weiteren Feder (20) relativ zueinander in Axialrichtung zur Drehachse (8) verschiebbar sind, wobei die weitere Feder (20) auf das Spannteil (5) eine im Wesentlichen parallel zur Drehachse (8) gerichtete Kraft (F₃) ausübt, die der vom Riemen auf das Spannteil (5) ausgeübten Kraft (F₁)derart entgegenwirkt, dass sich eine im Wesentlichen auf die axiale Mitte des radialen Gleitlagers (14) gerichtete, resultierende Kraft (F_{R}) ergibt, bei der ein Kippmoment im Bereich des radialen Gleitlagers (14) im Wesentlichen nicht erzeugt wird.

2. Riemenspanner nach Anspruch 1, **dadurch gekennzeichnet, dass** das Spannteil (5) mit der Lagerbuchse (13) versehen ist und die weitere Feder (20) auf die Lagerbuchse (13) einwirkt.

3. Riemenspanner nach Anspruch 1 oder 2, **dadurch gekennzeichnet, dass** die weitere Feder (20) eine Tellerfeder ist, die koaxial um die Drehachse (8) angeordnet ist.

4. Riemenspanner nach Anspruch 3, **dadurch gekennzeichnet, dass** zwischen der Tellerfeder (20) und der Lagerbuchse (13) eine Stützscheibe (22) angeordnet ist, wobei zwischen der Stützscheibe (22) und der Lagerbuchse (13) ein axiales Gleitlager ausgebildet ist.

5. Riemenspanner nach einem der Ansprüche 1 bis 4, **dadurch gekennzeichnet, dass** die durch die weitere Feder (20) ausgeübte Kraft (F₃) durch ein ein axiales Gleitlager und ein Stützstück (15) enthaltendes Widerlager aufgenommen wird.

6. Riemenspanner nach einem der Ansprüche 1 bis 5, **dadurch gekennzeichnet, dass** durch die weitere Feder (20) eine Dämpfungseinrichtung zum Dämpfen der Verschwenkbewegung des Spannteiles (5) um die Drehachse (8) beaufschlagt wird.

7. Riemenspanner nach Anspruch 6, **dadurch gekennzeichnet, dass** die Dämpfungseinrichtung eine Dämpfungsscheibe (31) aus einem glasfaserverstärkten Kunststoff, insbesondere einem Polyamid mit etwa 5 % Glasfaseranteil und eine an der Dämpfungsscheibe (31) anliegende Sicherungsscheibe (15) aus Stahl, insbesondere einem rostfreien Stahl, enthält.

8. Riemenspanner nach einem der Ansprüche 1 bis 5, **dadurch gekennzeichnet, dass** das radiale Gleitlager (14) einen Lagerzapfen (12) enthält, auf dem in Axialrichtung bezüglich der Drehachse (8) in folgender Reihenfolge angeordnet sind:
- ein Sicherungsstück (21, 15);
- eine Tellerfeder (20);
- eine mit dem Spannteil (5) verbundene Lagerbuchse (13); und
- ein Sicherungsstück (15, 21).

9. Riemenspanner nach einem der Ansprüche 1 bis 7, **dadurch gekennzeichnet, dass** das radiale Gleitlager (14) einen Lagerzpafen (12) enthält, auf dem in Axialrichtung bezüglich der Drehachse (8) in folgender Reihenfolge angeordnet sind:
- ein Sicherungsstück (21, 15);
- eine Tellerfeder (20);
- eine mit dem Spannteil (5) verbundene Lagerbuchse (13);
- eine Dämpfungsscheibe (31); und
- ein Sicherungsstück (15, 21).

10. Riemenspanner nach einem der Ansprüche 1 bis 9, **dadurch gekennzeichnet, dass** die weitere Feder (20) eine Kraft (F₃) zwischen 4000 bis 7000 N ausübt.

## Claims

1. Belt tensioner (1, 30) with a tensioning element (5), which can be brought into contact with a belt by means of a belt support (10) to provide a tension and is connected at a distance from the belt support (10) with a radial journal bearing (14) and is pivotable about its axis of rotation (8), in which the tensioning and pivoting motion of the belt support (10) is achieved by load exerted by a torsion spring (19), and in which the tensioning element (5) is under load from a further spring (20), **characterised in that** the radial journal bearing (14) is formed by the inner surface of a bearing bush (13) and the outer surface of a bearing pin (12), which are movable against the force exerted by the further spring (20) relative to one another in a direction along the direction of the axis of rotation (8), in which the further spring (20) exerts a directed force (F₃) on the tensioning element (5) which is substantially parallel to the axis of rotation (8), which counters the force (F₁) exerted by the belt to the tensioning element (5), which generates a resultant force (F_{R}) directed substantially at the central axis of the radial journal bearing (14), such that, substantially, no turning moment is produced in the vicinity of the radial journal bearing (14).

2. Belt tensioner as in Claim 1, **characterised in that** the tensioning element (5) is fitted with the bearing bush (13) and the further spring (20) acts on the bearing bush (13).

3. Belt tensioner as in either of Claims 1 and 2, **characterised in that** the further spring (20) is a cup spring, which is fitted coaxially with the axis of rotation (8).

4. Belt tensioner as in Claim 3, **characterised in that** a support plate (22) is fitted between the cup spring (20) and the bearing bush (13), in which an axial journal bearing is formed between the support plate (22) and the bearing bush (13).

5. Belt tensioner as in any one of Claims 1 to 4, **characterised in that** the force (F₃) exerted by the further spring (20) is absorbed by an abutment containing an axial journal bearing (14) and a support element (15).

6. Belt tensioner as in any one of Claims 1 to 5, **characterised in that** a damping device to damp the pivoting motion of the tensioning element (5) about the axis of rotation (8) is under load from the further spring (20).

7. Belt tensioner as in Claim 6, **characterised in that** the damping device includes a damping plate (31) made from glass fibre reinforced plastic, specifically a polyamide with a glass fibre content of approximately 5% and a safety plate (15) made from steel, specifically stainless steel, in contact with the damping plate (31).

8. Belt tensioner as in any one of Claims 1 to 5, **characterised in that** the radial journal bearing (14) includes a bearing pin (12), on which are fitted in the axial direction relative to the axis of rotation (8) in the following order
- a safety fitment (21, 15);
- a cup spring (20);
- a bearing bush (13) connected to the tensioning element (5); and
- a safety fitment (15, 21).

9. Belt tensioner as in any one of Claims 1 to 7, **characterised in that** the radial journal bearing (14) includes a bearing pin (12), on which are fitted in the axial direction relative to the axis of rotation (8) in the following order:
- a safety fitment (15, 21);
- a cup spring (20);
- a bearing bush (13) connected to the tensioning element (5);
- a damping plate (31; and
- a safety fitment (15, 21).

10. Belt tensioner as in any one of claims 1 to 9, **characterised in that** the further spring (20) exerts a force (F₃) of between 4000 and 7000 N.

## Revendications

1. Tendeur de courroie (1, 30) comportant une pièce de tension (5) qui peut être amenée en contact avec une courroie par l'intermédiaire d'un support de courroie (10) en vue d'appliquer une force de tension, et qui est reliée, à distance du support de courroie (10), à un palier lisse radial (14) et est apte à pivoter autour de l'axe de rotation (8) dudit palier lisse, le mouvement de tension et de pivotement du support de courroie (10) étant effectué sous la contrainte exercée par un ressort de torsion (19), et la pièce de tension (5) étant contrainte par un autre ressort (20), **caractérisé en ce que** le palier lisse radial (14) est formé par la surface intérieure d'un coussinet (13) et la surface extérieure d'un tourillon (12) qui sont aptes à se déplacer l'une par rapport à l'autre dans une direction axiale par rapport à l'axe de rotation (8) en s'opposant à la force générée par l'autre ressort (20), l'autre ressort (20) exerçant sur la pièce de tension (5) une force (F₃) qui est dirigée sensiblement parallèlement à l'axe de rotation (8) et qui s'oppose à la force (F₁) exercée par la courroie sur la pièce de tension (5), de façon à obtenir une force résultante (F_{R}) qui est dirigée sensiblement vers le milieu axial du palier lisse radial (14) et pour laquelle il n'est généré essentiellement aucun couple dans la région du palier lisse radial (14).

2. Tendeur de courroie selon la revendication 1, **caractérisé en ce que** la pièce de tension (5) est dotée du coussinet (13), et **en ce que** l'autre ressort (20) agit sur le coussinet (13).

3. Tendeur de courroie selon la revendication 1 ou 2, **caractérisé en ce que** l'autre ressort (20) est un ressort à disques qui est disposé coaxialement à l'axe de rotation (8).

4. Tendeur de courroie selon la revendication 3, **caractérisé en ce qu'**une rondelle d'appui (22) est disposée entre le ressort à disques (20) et le coussinet (13), un palier lisse axial étant conformé entre la rondelle d'appui (22) et le coussinet (13).

5. Tendeur de courroie selon l'une des revendications 1 à 4, **caractérisé en ce que** la force (F₃) exercée par l'autre ressort (20) est absorbée par un élément d'appui contenant un palier lisse axial et une pièce de support (15).

6. Tendeur de courroie selon l'une des revendications 1 à 5, **caractérisé en ce qu'**un dispositif d'amortissement est soumis à l'action d'un autre ressort (20) afin d'amortir le mouvement de pivotement de la pièce de tension (5) autour de l'axe de rotation (8).

7. Tendeur de courroie selon la revendication 6, **caractérisé en ce que** le dispositif d'amortissement contient un disque d'amortissement (31) en matière plastique renforcée par des fibres de verre, en particulier en polyamide contenant 5% de fibres de verre, et un disque protection (15) en acier, en particulier en acier inoxydable, portant contre le disque d'amortissement (31).

8. Tendeur de courroie selon l'une des revendications 1 à 5, **caractérisé en ce que** le palier lisse radial (14) contient un tourillon (12) sur lequel sont disposés dans cet ordre, dans une direction axiale par rapport à l'axe de rotation (8) :
- une pièce de protection (21, 15),
- un ressort à disques (20),
- un coussinet (13) relié à la pièce de tension (5), et
- une pièce de protection (15, 21).

9. Tendeur de courroie selon l'une des revendications 1 à 7, **caractérisé en ce que** le palier lisse radial (14) contient un tourillon (12) sur lequel sont disposés dans cet ordre, dans une direction axiale par rapport à l'axe de rotation (8) :
- une pièce de protection (21, 15),
- un ressort à disques (20),
- un coussinet (13) relié à la pièce de tension (5), et
- une pièce de protection (15, 21).

10. Tendeur de courroie selon l'une des revendications 1 à 9, **caractérisé en ce que** l'autre ressort (20) exerce une force (F₃) dans une gamme allant de 4000 à 7000 N.
